(19) Europäisches Patentamt
European Patent Office
Office européen des brevets

(11) Veröffentlichungsnummer: **0 212 510 A2**

# (12) EUROPÄISCHE PATENTANMELDUNG

(21) Anmeldenummer: **86111020.3**

(22) Anmeldetag: **09.08.86**

(51) Int. Cl.⁴: **C08L 77/00**, C08L 51/04, C08J 3/02

(30) Priorität: **16.08.85 DE 3529240**

(43) Veröffentlichungstag der Anmeldung: **04.03.87 Patentblatt 87/10**

(84) Benannte Vertragsstaaten: **BE DE FR GB IT NL**

(71) Anmelder: **BASF Aktiengesellschaft**
**Carl-Bosch-Strasse 38**
**D-6700 Ludwigshafen(DE)**

(72) Erfinder: **Matthies, Hans Georg, Dr.**
**Homburger Strasse 2**
**D-6700 Ludwigshafen(DE)**
Erfinder: **MC Kee, Graham Edmund, Dr.**
**Kastanienweg 8**
**D-6940 Weinheim(DE)**
Erfinder: **Theysohn, Rainer, Dr.**
**Am Bruch 38**
**D-6710 Frankenthal(DE)**

## (54) Schlagzähe Polyamidformmassen und deren Herstellung.

(57) Schlagzähe Polyamidformmassen, enthaltend

A. 30 bis 95 Gewichtsteile eines linearen thermoplastischen Polyamids, aufgebaut aus Terephthalsäure und Isophthalsäure sowie Alkandiaminen und/oder Cycloalkandiaminen mit 4 bis 21 C-Atomen,

B. 5 bis 70 Gewichtsteile mindestens eines durch Emulsionspolymerisation hergestellten, mit einer Teilchengröße unter 2 µm in der Komponente A dispergierten und darin weitgehend unlöslichen kautschukelastischen Polymerisaten, wobei die Summe von A und B 100 Gewichtsteile beträgt,

C. 0 bis 100 Gewichtsteile verstärkend wirkende Füllstoffe, bezogen auf die Summe der Komponenten A und B, sowie

D. gegebenenfalls Zusatzstoffe in wirksamen Mengen.

EP 0 212 510 A2

## Schlagzähe Polyamidformmassen und deren Herstellung

Aus der Praxis des Spritzgießens von Polyamid-Formmassen, die schlagzäh ausgerüstet sind, ist die Erscheinung des Delaminierens bekannt. Dabei handelt es sich um eine durch teilweise oder völlige Unverträglichkeit der Komponenten eines Polymerblends hervorgerufene Phasentrennung. Diese Phasentrennung macht sich bemerkbar visuell durch eine unruhige, perlmuttartige glänzende oder ungleichmäßig strukturierte Oberfläche. Sie kann bis zur schichtenartigen Auftrennung und Spleissung des Formkörpers führen - ("Blätterteigstruktur"). Dadurch werden die gewünschten Eigenschaften des Polymerblends stark beeinträchtigt oder gar nicht erreicht und unbrauchbare Formkörper erhalten.

Es war deshalb die technische Aufgabe gestellt, solche Polyamid-Formmassen, die schlagzäh ausgerüstet sind, zur Verfügung zu stellen, die die Erscheinung des Delaminierens daraus hergestellter Formkörper bei Erhalt der gewünschten sonstigen Eigenschaften, wie z.B. gute Steifigkeit und Schlagzähigkeit in der Kälte, nicht zeigen.

Diese Aufgabe wird gelöst durch schlagzähe Polyamidformmassen, enthaltend

A. 30 bis 95 Gewichtsteile eines linearen thermoplastischen Polyamids, aufgebaut aus Terephthalsäure und Isophthalsäure sowie Alkandiaminen und/oder Cycloalkandiaminen mit 4 bis 21 C-Atomen,

B. 5 bis 70 Gewichtsteile mindestens eines durch Emulsionspolymerisation hergestellten, mit einer Teilchengröße unter 2 µm in der Komponente A dispergierten und darin weitgehend unlöslichen kautschukelastischen Polymerisaten, wobei die Summe von A und B 100 Gewichtsteile beträgt,

C. 0 bis 100 Gewichtsteile verstärkend wirkende Füllstoffe, bezogen auf die Summe der Komponenten A und B, sowie

D. gegebenenfalls Zusatzstoffe in wirksamen Mengen.

Die erfindungsgemäßen Formmassen enthalten als Komponente A 30 bis 95 Gewichtsteile, insbesondere 60 bis 93 Gewichtsteile mindestens eines linearen thermo-plastischen Polyamids, aufgebaut aus Terephthalsäure und Isophthalsäure sowie Alkandiaminen und/oder Cycloalkandiaminen mit 4 bis zu 21 C-Atomen, vorzugsweise mit 6 bis 17 C-Atomen. In bevorzugten Polyamiden beträgt das Verhältnis von Terephthalsäure:Isophthalsäure 20:80 bis 80:20, insbesondere 30:70 bis 70:30. Bevorzugte Alkandiamine sind geradkettig und insbesondere α,ω-Diamine, insbesondere Hexamethylendiamin-1,6. Bevorzugte Cycloalkandiamine sind solche der Formel

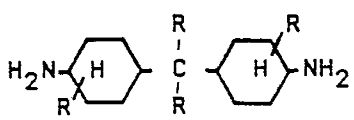
(I),

wobei R jeweils ein Wasserstoffatom, eine Methyl- oder Ethylgruppe bedeutet.

Die Cycloalkandiamine der Formel I enthalten vorzugsweise mindestens 50 Gewichtsprozent des trans-trans-oder cis-trans-Isomeren.

Die Polyamide gemäß der Erfindung sind an sich bekannt und werden nach an sich bekannten Verfahren durch Polykondensation aus den entsprechenden Monomeren hergestellt. Sie haben z.B. Molekulargewichte von mindestens 5000 und haben vorteilhaft eine relative Viskosität, gemessen an einer 1 %igen Lösung in $H_2SO_4$ bei 23°, von 1,4 bis 3,4, vorzugsweise 1,5 bis 2,8.

Als Komponente B werden kautschukelastische Polymerisate in einer Menge von 5 bis 70 Gewichtsteilen, insbesondere 7 bis 40 Gewichtsteilen, verwendet, die durch Emulsionspolymerisation hergestellt werden. Die Polymerisate sind weitgehend unlöslich in der Komponente A. Geeignete Polymerisate besitzen vorteilhaft eine Glas-Übergangstemperatur unterhalb von -20°C.

Derartige kautschukartige Polymerisate sind an sich bekannt. Sie werden hergestellt durch Polymerisation einer Emulsion von geeigneten Monomeren in Wasser.

Für die Kautschukkomponente werden bevorzugt Monomere eingesetzt, deren Polymere eine Glasübergangstemperatur von unter -20°C besitzen. Beispiele solcher Monomerer sind Butadien, Isopren und (Meth)acrylate, wie z.B. n-Butylacrylat und Ethylhexylacrylat. Diese Monomeren können auch mit anderen Monomeren, deren Polymere eine Glastemperatur oberhalb von 0°C besitzen, copolymerisiert werden, wie z.B. Styrol, Acrylnitril, Methylvinylether, Ester der (Meth)acrylsäure, wie Methylmethacrylat und Ethylacrylat. Diese (Co)-

polymere bilden vorteilhaft einen inneren Kern des Polymerteilchen sowie ein oder mehrere Schalen, z.B. 1 bis 3 Schalen. Vorzugsweise enthält die äußere Schale im Gegensatz zu dem inneren Kern Gruppen, die eine Haftung an das Polyamid bewirken. Diese Gruppen können natürlich auch im inneren Kern des Teilchens vorhanden sein, jedoch ist es zu erwarten, daß sie ihren Zweck, nämlich eine Haftung an das Polyamid, dort unzureichend erfüllen.

Bei einem Schalenaufbau der Teilchen ist es nur nötig, daß ein Teil -vorzugsweise der innere Kern -eine Glasübergangstemperatur unterhalb -20°C besitzt. Andere Teile, z.B. Schalen, können hart sein und eine Glastemperatur von über -20°C besitzen.

Es ist sogar wünschenswert, daß die äußere Schale hart ist, wenn das Polymer von der Dispersion durch Sprühtrocknen oder Koagulation abgetrennt werden soll. Wird jedoch die Polymerdispersion direkt in die Polyamid-Schmelze eingepumpt, bringt eine harte Hülle keine Vorteile.

Beispiele für die Molekülgruppen, die eine Haftung an den Molekülen der Komponente A bewirken, sind Monomere mit Carbonsäuregruppen, Carbonsäure liefernde Gruppen, Carbonsäureamidgruppen, wie z.B. (Meth)acrylsäure, t-Butylacrylat, Fumarsäure, Acrylamid oder Methacrylamid.

Die Polymerisatteilchen in der Dispersion sind zumindest teilweise vernetzt. So kann z.B. der Kern des Polymerisatteilchens stark vernetzt sein, während die äußere Schale, die vorzugsweise die haftungsfördernden Comonomeren einpolymerisiert enthält, gegebenenfalls auch unvernetzt sein kann. Vorteilhaft hat das Polymerisat mehr als 30 Gew.% unlösliche Anteile.

Als Vernetzer wirkende Monomere sind beispielsweise Divinylbenzol, Diallylphthalat, Tricyclodecenylacrylat, Triallylcyanurat, Triallylisocyanurat und Dihydrodicyclopentadienacrylat geeignet.

Weiter ist es vorteilhaft, Polymerisatteilchen zu verwenden mit einem Kern aus einpolymerisierten Butadien-oder Isoprenpolymeren und einer Schale aus einem (Meth)acrylatpolymeren. Der Vorteil eines solchen Polymeren ist, daß die Poly(meth)-acrylatschale den Polybutadienkern vor oxidativem Abbau schützen kann.

Typische Beispiele für einsetzbare Kautschuke sind unten wiedergegeben. Sie stellen nur eine kleine Auswahl von den möglichen Kautschuken dar.

| Kern | Schale |
|---|---|
| Bu | Bu + Carboxylsäure wie AS oder MAS |
| Bu | Bu + t-BA |

| Kern | Schale |
|---|---|
| Bu | Bu + AM |
| Bu | nBA + Carboxylsäure |
| Bu | nBA + t-BA |
| Bu | nBA + AM |
| Bu | MMA |
| Bu | MMA + Carboxylsäure |
| Bu | MMA + t-BA |
| Bu | MMA + AM |
| nBA | wie bei Bu als Kern |
| nBA | wie bei Bu als Kern |
| Bu-nBA-Copolymer | wie bei Bu als Kern |
| AHA | wie bei Bu als Kern |
| AHA-Bu-Copolymer | wie bei Bu als Kern |
| Isopren | wie bei Bu als Kern |
| Isopren-nBA-Copolymer | wie bei Bu als Kern |
| Bu-S | wie bei Bu als Kern |
| Bu-AN | wie bei Bu als Kern |
| nBA-AN | wie bei Bu als Kern |
| | usw. |

Dabei werden folgende Abkürzungen verwendet:

Bu = Butadien
n-BA = n-Butylacrylat
AHA = Ethylhexylacrylat
S = Styrol
AN = Acrylnitril
AS = Acrylsäure
MAS = Methacrylsäure
t-BA = t-Butylacrylat
AM = Acrylamid
MMA = Methylmethacrylat

Die Polymerisation wird in bekannter Weise unter Verwendung üblicher Emulgatoren und Katalysatoren durchgeführt.

Die Polymerisatdispersionen, wie sie gemäß der Erfindung eingesetzt werden, enthalten üblicherweise etwa 20 bis 70 Gew.%, vorzugsweise 40 bis 64 Gew.% Wasser. Die Teilchengröße selbst liegt im allgemeinen zwischen 0,05 und 2 µ, vorzugsweise zwischen 0,08 und 0,7 µ.

Die erindungsgemäßen Formmassen enthalten 0 bis 100 Gewichtsteile, insbesondere 5 bis 80 Gewichtsteile, bezogen auf die Summe von A und B, verstärkend wirkende Füllstoffe (Komponente C). Geeignete Füllstoffe sind Glasfasern, Kohlenstoffasern, Silikate wie Wollastonit, Aluminiumsilikat, ferner Magnesiumcarbonat, Glimmer oder Feldspat.

Bevorzugt werden Glasfasern oder Wollastonit als verstärkend wirkende Füllstoffe verwendet.

Die erfindungsgemäßen Polyamidformmassen enthalten gegebenenfalls zusätzlich übliche Zusatzstoffe D in wirksamen Mengen. Geeignete Zusatzstoffe sind beispielsweise Stabilisatoren oder Oxidationsverzögerer, Mittel gegen Wärmezersetzung und Zersetzung durch ultraviolettes Licht, Gleitund Entformungsmittel, Färbemittel, wie Farbstoffe und Pigmente. Die Stabilisatoren können den Massen

in jedem Stadium der Herstellung zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann.

Zu den Oxidationsverzögerern und Wärmestabilisatoren, die den thermoplastischen Massen gemäß der Erfindung zugesetzt werden können, zählen beispielsweise Halogenide von Metallen der Gruppe 1 des Periodischen Systems, z.B. Natrium, Kalium, Lithium, Halogenide wie Kupfer-(I)-Halogenide, z.B. Iodide. Ferner sind geeignet sterisch gehinderte Phenole oder Hydrochinone. Sie werden in der Regel in Konzentrationen bis zu 1 Gew.%, bezogen auf das Gewicht des Polyamids, zugesetzt.

Als UV-Stabilisatoren verwendet man diejenigen, die allgemein zu Polymeren zugesetzt werden, in Mengen bis zu 2 Gew.-%, bezogen auf das Polyamid. Beispiele für geeignete UV-Stabilisatoren sind verschiedene substituierte Resorcine, Salicylate, Benzotriazole oder Benzophenone.

Geeignete Gleit-und Entformungsmittel, die z.B. in Mengen bis zu 1 Gew.% der Formmasse zugesetzt werden, sind Stearinsäure, Stearylalkohol, Stearinsäureamide, ferner können zugesetzt werden organische Farbstoffe, wie Nigrosin, Pigmente wie Titandioxid oder Phthalocyanine, ferner Ruß.

Die Herstellung der Formmassen gemäß der Erfindung erfolgt durch Vermischen der Komponenten in einer an sich bekannten Mischvorrichtung. Dabei wird zunächst das Polyamid plastifiziert. Die Schmelze kann dann mit der Kautschukdispersion innig vermischt werden. Dabei verdampft spontan das Wasser und die Kautschukteilchen verteilen sich gleichmäßig in der Schmelze. Dieser Vorgang läuft so schnell ab, daß die Kautschukteilchen keine Gelegenheit haben zusammenzufließen.

Das Vermischen der Komponenten kann auch durch Zusammengeben der getrockneten oder gefällten, feuchten Kautschuke mit dem Polyamid erfolgen; jedoch mit Kautschuken mit weichen Pfropfhüllen ist durch seine klebrige Konsistenz mit Dosierungsschwierigkeiten zu rechnen und die Verwendung der Dispersion bei dem Abmischen ist vorzuziehen.

Die Ausgangsstoffe werden zweckmäßig in selbstreinigenden, zweiwelligen Schneckenmaschinen mit im gleichen Sinne rotierenden Schneckenwellen vermischt. Bei der Verwendung des Kautschuks in Dispersionszustand werden die Ausgangsstoffe an getrennten Stellen dem Extruder zugeführt, wobei üblicherweise der Thermoplast am Einzug der Schneckenmaschine zugeführt und in einer Schneckenzone mit tief eingeschnittenen Gewindeprofilen plastifiziert und über eine Knetzone in eine zweite Schneckenzone gefördert wird. Die Kautschukdispersion wird mittels einer Dosierpumpe, die einen für die Förderung des Kautschuks erforderlichen Flüssigkeitsvordruck bewirkt, in die zweite Schneckenzone zudosiert. Kautschuk und Thermoplast werden in mehreren folgenden Abschnitten mit unterschiedlicher Gangzahl und Gewindesteigung miteinander innig vermischt. Das dabei spontan verdampfende Wasser wird als Dampf durch Entgasungsstutzen entfernt, die zweckmäßig jeweils im Anschluß an eine Knetzone angebracht sind. Die Wasserentfernung kann gegebenenfalls auch über ein Druckkontrollventil erfolgen. Die Masse wird anschließend ausgepreßt, gekühlt und zerkleinert. Bei der Verwendung des Kautschuks im trockenen Zustand können die Ausgangsstoffe getrennt oder zusammen in den Extruder dosiert werden.

Die Verarbeitungstemperatur liegt im üblichen Verarbeitungsbereich der betreffenden Polyamide, im allgemeinen zwischen 220 und 320°C. Vielfach ist es vorteilhaft, möglichst niedrige Temperaturen zu wählen, um eine thermische Schädigung der Komponenten zu verhindern.

Die erhaltenen Produkte besitzen wertvolle mechanische Eigenschaften und zeichnen sich durch besonders hohe Schlagzähigkeit und gute Oberfläche aus. Sie sind daher geeignet für die Herstellung von technischen Formteilen aller Art.

Der Gegenstand der Erfindung sei an folgenden Beipielen veranschaulicht:

In den Beispielen werden folgende Abkürzungen verwendet:

n-BA = n-Butylacrylat

MAS = Methacrylsäure

DCPA = Dihydrodicyclopentadienylacrylat

t-BA = t-Butylacrylat

Bu = Butadien

AM = Acrylamid

MMA = Methylmethacrylat

Die Zahlen in den Klammern geben das Gewichtsverhältnis der Komponenten zueinander in den Schalen und die Zahlen vor den Klammern das Gewichtsverhältnis der Schalen zueinander an. Die Schalen sind voneinander mit dem Zeichen // getrennt.

In den Beispielen wurden folgende Polymerdispersionen verwendet:

E1 0,4 (98,5 nBA + 1,5 MAS)//0,6 (98 nBA + 2 DCPA)

Kautschukelastisches Polymerisat aus

98,2 Gewichtsteilen n-Butylacrylat

1,2 Gewichtsteilen Dihydrodicyclopentadienylacrylat

0,6 Gewichtsteilen Methacrylsäure,

hergestellt durch Emulsionspolymerisation in 66 Gewichtsteilen Wasser unter Verwendung von 1,0 Gewichtsteilen Natriumsalz einer $C_{12}C_{18}$-Paraffinsulfonsäure als Emulgator bei 65°C. Dihydrodicyclopentadienylacrylat wurde mit einem Teil des n-Butylacrylats gemischt und in den ersten 60 % des n-Butylacrylatzulaufs kontinuierlich zudosiert. Die Methacrylsäure wurde in den letzten 40 % des n-Butylacrylatzulaufs kontinuierlich zudosiert.

Teilchengröße 0,4 µm monodispers

Feststoffgehalt ~ 60 %

Glasübergangstemperatur -40°C.

E2 0,4 (95 nBA + 5 tBA)//0,6 (98 nBA + 2 DCPA)

Kautschukelastisches Polymerisat aus

96,8 Gewichtsteilen n-Butylacrylat

1,2 Gewichtsteilen Dihydrodicyclopentadienylacrylat

2 Gewichtsteilen t-Butylacrylat,

hergestellt wie E1 mit t-Butylacrylat statt Methacrylsäure.

Teilchengröße 0,4 µm monodispers

Feststoffgehalt ~ 60 %

Glasübergangstemperatur -40°C.

E3 0,4 (94 nBA + 6 MAS)//0,6 (98 nBA + 2 DCPA)

Kautschukelastisches Polymerisat aus

96,4 Gewichtsteilen n-Butylacrylat

1,2 Gewichtsteilen Dihydrodicyclopentadienylacrylat

2,4 Gewichtsteilen Methacrylsäure,

hergestellt wie E2 aber mit Methacrylsäure statt t-Butylacrylat

Feststoffgehalt ~ 50 %.

E4 0,4 (97 nBA + 3 AM)//0,6 (98 nBA + 2 DCPA)

Kautschukelastisches Polymerisat aus

97,6 Gewichtsteilen n-Butylacrylat

1,2 Gewichtsteilen Tricyclodecenylacrylat

1,2 Gewichtsteilen Acrylamid

hergestellt wie E1 mit Acrylamid anstelle von Methacrylsäure.

Teilchengröße 0,4 µm monodispers

Feststoffgehalt ~ 45 %

Glasübergangstemperatur -40°C.

E5 0,3 (93,4 nBA + 0,6 MAS + 6 t-BA)//0,7 (Bu)

Kautschukelastisches Polymerisat aus

28,02 Gewichtsteilen n-Butylacrylat

0,18 Gewichtsteilen Methacrylsäure

1,80 Gewichtsteilen t-Butylacrylat

2,68 Gewichtsteilen Ethylacrylat

0,12 Gewichtsteilen Methacrylamid

67,2 Gewichtsteilen Butadien

hergestellt durch Emulsionspolymerisation, wobei als erste Stufe 67,2 Teile Butadien in Gegenwart von 0,67 Teilen t-Dodecylmercaptan als Regler polymerisiert wurden (innerer Kern) und als zweite Stufe (äußere Schale) 30 Gewichtsteile einer Mischung als n-Butylacrylat, Methacrylsäure und t-Butylacrylat (93,4:0,6:6 Gewichtsverhältnis) aufpolymerisiert wurden.

Zwischen der ersten und zweiten Stufe erfolge eine gezielte Agglomeration der ca. 0,1 µm großen Teilchen durch Zugabe von 4 Gew.-% (fest bezogen auf fest) einer Ethylacrylat-Methacrylamid-Copolymerdispersion.

Teilchengröße 0,1 bis 0,7 µm

Feststoffgehalt ~ 50 %

Glasübergangstemperatur der äußeren Schale - 40°C.

Glasübergangstemperatur des inneren Kerns - 80°C.

E6 0,3 (94 nBA + 6 MAS)//0,7 Bu

Kautschukelastisches Polymerisat aus

28,2 Gewichtsteilen n-Butylacrylat

1,8 Gewichtsteilen Methacrylsäure

2,68 Gewichtsteilen Ethylacrylat

0,12 Gewichtsteilen Methacrylamid

67,1 Gewichtsteilen Butadien

hergestellt durch Emulsionspolymerisation, wobei als erste Stufe 67,2 Teile Butadien in Gegenwart von 0,67 Teilen t-Dodecylmercaptan als Regler polymerisiert wurden (innerer Kern) und als zweite Stufe (äußere Schale) 30 Gewichtsteile einer Mischung aus n-Butylacrylat und Methacrylsäure - (94:6 Gewichtsverhältnis) aufpolymerisiert wurden. Zwischen der ersten und zweiten Stufe erfolgte eine gezielte Agglomeration der ca. 0,1 µm großen Teilchen durch Zugabe von 4 Gew.% (fest bezogen auf fest) einer Ethylacrylat-Methacrylamid-Copolymerdispersion.

Teilchengröße 0,1 bis 0,7 µm

Feststoffgehalt 50 %

Glasübergangstemperatur der äußeren Schale - 40°C

Glasübergangstemperatur des inneren Kerns - 80°C.

E7 0,3 (84 MMA + 16 t-BA)//0,7 Bu

Kautschukelastisches Polymerisat aus

25,2 Gewichtsteilen Methylmethacrylat

4,8 Gewichtsteilen t-Butylacrylat

2.68 Gewichtsteilen Ethylacrylat

0,12 Gewichtsteilen Methacrylamid

67,1 Gewichtsteilen Butadien

hergestellt durch Emulsionspolymerisation, wobei als erste Stufe 67,2 Teile Butadien in Gegenwart von 0,67 Teilen t-Dodecylmercaptan als Regler polymerisiert wurden (innerer Kern) und als zweite Stufe (äußere Schale) 30 Gewichtsteile einer Mischung aus Methylmethacrylat und t-Butylacrylat - (84:16 Gewichtsverhältnis) aufpolymerisiert wurden. Zwischen der ersten und zweiten Stufe erfolgte eine gezielte Agglomeration der ca. 0,1 µm großen Teilchen durch Zugabe von 4 Gew.% (fest bezogen auf fest) einer Ethylacrylat-Methacrylamid-Copolymerdispersion.

Teilchengröße 0,1 bis 0,7 µm

Feststoffgehalt 50 %

Glasübergangstemperatur der äußeren Schale - 90°C

Glasübergangstemperatur des inneren Kerns - 80°C.

Beispiele 1 bis 7

Die Herstellung der thermoplastischen Formmassen erfolgte in einem Extruder (Type ZSK 53 der Fa. Werner und Pfleiderer). Das Polyamid wurde am Einzug der Schneckenmaschine zugeführt und in einer ersten Schneckenzone mit tief eingeschnittenen Gewindeprofilen plastifiziert und über eine Knetzone in eine zweite Schneckenzone gefördert, in der die wäßrige Suspension des kautschukelastischen Polymerisats dosiert zugeführt wurde, wobei die Förderung der Dispersion durch den Flüssigkeitsvordruck einer Dosierpumpe bewirkt wird.

Polyamid und Kautschuk werden in den nachfolgenden Abschnitten unterschiedlicher Gangzahl und Gewindesteigung miteinander innig vermischt, wobei im Anschluß an die Knetzone das spontan verdampfte Wasser als Dampf durch zwei Entgasungsstutzen entfernt wird und anschließend die Formmasse als Strang ausgepreßt, abgekühlt und zerkleinert wird.

Alle in den Beispielen 1-7 und Vergleichsbeispielen genannten Abmischungen wurden vor dem Verspritzen mittels ZSK 30-Doppelschneckenextruder der Fa. Werner & Pfleiderer konfektioniert.

Beispiel 1

80 Gewichtsteile eines Copolyamids, aufgebaut aus Terephthalsäure (40 Mol%), Isophthalsäure (60 Mol%), Hexamethylendiamin (80 Mol%) und 4,4'-Diaminodicyclohexylmethan (20 Mol%) mit einer rel. Visk. von 1,70, gemessen in einer 1 gewichtsprozentigen Lösung in konz. $H_2SO_4$ bei 23°C und 33 Gewichtsteile einer Kautschukdispersion gemäß Beispiel E1 werden bei Temperaturen von 270°C und Schneckendrehzahlen von 150 Upm auf einer Zweischneckenmaschine miteinander vermischt, extrudiert und granuliert. Das Granulat mit einem Kautschukgehalt von 20 Gewichtsteilen wurde getrocknet und auf einer Spritzgußmaschine zu Testkästchen (120 x 60 x 40 mm) gespritzt.

Die Oberfläche der Testkästchen war glatt und unstrukturiert, zeigte keine Fließlinien und keine Delaminierung (Blätterteigstruktur). Weitere Eigenschaften sind aus Tabelle 1 zu entnehmen.

Beispiel 2

83 Gewichtsteile eines Copolyamids, aufgebaut aus Terephthalsäure (40 Mol%), Isophthalsäure - (60 Mol%), und Hexamethylendiamin (100 Mol%) mit einer rel. Visk. von 1,87, gemessen in einer 1 gewichtsprozentigen Lösung in konz. $H_2SO_4$ bei 23°C und 28 Gewichtsteile einer Kautschukdispersion gemäß Beispiel E2 werden bei Temperaturen von 270°C und Schneckendrehzahlen von 150 Upm auf einem Zweischneckenextruder miteinander vermischt, extrudiert und granuliert. Das Granulat mit einem Kautschukgehalt von 17 Gewichtsteilen wurde getrocknet und auf einer Spritzgußmaschine zu Testkästchen (120 x 60 x 40 mm) verarbeitet. Die Oberfläche der Testkästchen war glatt und unstrukturiert, zeigte keine Fließlinien und keine Delaminierung (Blätterteigstruktur). Weitere Eigenschafen sind aus Tabelle 1 zu entnehmen.

Beispiel 3

88 Gewichtsteile eines Copolyamids, aufgebaut aus Terephthalsäure (40 Mol%), Isophthalsäure - (60 Mol%), Hexamethylendiamin (100 Mol%) und einer rel. Visk. von 1,85, gemessen in einer 1 gewichtsprozentigen Lösung in konz. $H_2SO_4$ bei 23°C und 20 Gewichtsteile einer Kautschukdispersion gemäß Beispiel E3 werden bei Temperaturen von 270°C und Schneckendrehzahlen von 150 Upm auf einem Zweischneckenextruder miteinander vermischt, extrudiert und granuliert. Das Granulat mit einem Kautschukgehalt von 10 Gewichtsteilen wurde getrocknet und auf einer Spritzgußmaschine zu Testkästchen (120 x 60 x 40 mm) gespritzt.

Die Oberfläche der Testkästchen war glatt und unstrukturiert, zeigte keine Fließlinien und keine Delaminierung (Blätterteigstruktur). Weitere Eigenschaften sind aus Tabelle 1 zu entnehmen.

Beispiel 4

80 Gewichtsteile eines Copolyamids, aufgebaut aus Terephthalsäure (40 Mol%), Isophthalsäure (60 Mol%), Hexamethylendiamin (80 Mol%) und 4,4'-Diaminodicyclohexylmethan (20 Mol%) mit einer rel. Visk. von 1,72, gemessen in einer 1 gewichtsprozentigen Lösung in konz. $H_2SO_4$ bei 23°C und 40 Gewichtsteile einer Kautschukdispersion gemäß Beispiel E5 werden bei Temperaturen von 270°C und Schneckendrehzahlen von 150 Upm auf einem Zweischneckenextruder miteinander vermischt, extrudiert und granuliert. Das Granulat mit einem Kautschukgehalt von 20 Gewichtsteilen wurde getrocknet und auf einer Spritzgußmaschine zu Testkästchen (120 x 60 x 40 mm) verarbeitet. Die Oberfläche der Testkästchen war glatt und unstrukturiert, zeigte keine Fließlinien und keine Delaminierung (Blätterteigstruktur). Weitere Eigenschaften sind aus Tabelle 1 zu entnehmen.

Beispiel 5

80 Gewichtsteile eines Copolyamids, aufgebaut aus Terephthalsäure (40 Mol%), Isophthalsäure (60 Mol%), Hexamethylendiamin (80 Mol%) und 4,4'-Diaminodicyclohexylmethan (20 Mol%) mit einer rel. Visk. von 1,66, gemessen in einer 1 gewichtsprozentigen Lösung in konz. $H_2SO_4$ bei 23°C und 40 Gewichtsteile einer Kautschukdispersion gemäß Beispiel E6 werden bei Temperaturen von 260°C und Schneckendrehzahlen von 200 Upm auf einem Zweischneckenextruder miteinander vermischt, extrudiert und granuliert. Das Granulat mit einem Kautschukgehalt von 20 Gewichtsteilen wurde getrocknet und auf einer Spritzgußmaschine zu Testkästchen (120 x 60 x 40 mm) verarbeitet.

Die Oberfläche der Testkästchen war glatt und unstrukturiert, zeigte keine Fließlinien und keine Delaminierung (Blätterteigstruktur). Weitere Eigenschaften sind aus Tabelle 1 zu entnehmen.

Beispiel 6

82 Gewichtsteile eines Copolyamids, aufgebaut aus Terephthalsäure (40 Mol%), Isophthalsäure - (60 Mol%), Hexamethylendiamin (100 Mol%) und einer rel. Visk. von 1,74, gemessen in einer 1 gewichtsprozentigen Lösung in konz. $H_2SO_4$ bei 23°C und 40 Gewichtsteile einer Kautschukdispersion gemäß Beispiel E4 werden bei Temperaturen von 270°C und Schneckendreh zahlen von 150 Upm auf einem Zweischneckenextruder miteinander vermischt, extrudiert und granuliert. Das Granulat mit einem Kautschukgehalt von 18 Gewichtsteilen wurde getrocknet und Testkästchen (120×60×40 mm) daraus gespritzt.

Die Oberfläche der Testkästchen war glatt und unstrukturiert, zeigte keine Fließlinien und keine Delaminierung (Blätterteigstruktur). Weitere Eigenschaften sind aus Tabelle 1 zu entnehmen.

Beispiel 7

80 Gewichtsteile eines Copolyamids, aufgebaut aus Terephthalsäure (40 Mol%), Isophthalsäure (60 Mol%), Hexamethylendiamin (80 Mol%) und 4,4'-Diaminodicyclohexylmethan (20 Mol%) mit einer rel. Visk. von 1,66, gemessen in einer 1 gewichtsprozentigen Lösung in konz. $H_2SO_4$ bei 23°C und 40 Gewichtsteile einer Kautschukdispersion gemäß Beispiel E7 werden bei Temperaturen von 260°C und Schneckendrehzahlen von 200 Upm auf einem Zweischneckenextruder miteinander vermischt, extrudiert und granuliert. Das Granulat mit einem Kautschukgehalt von 20 Gewichtsteilen wurde getrocknet und auf einer Spritzgußmaschine zu Testkästchen (120×60×40 mm) verarbeitet.

Die Oberfläche der Testkästchen war glatt und unstrukturiert, zeigte keine Fließlinien und keine Delaminierung (Blätterteigstruktur). Weitere Eigenschaften sind aus Tabelle 1 zu entnehmen.

Vergleichsbeispiel 1

80 Gewichtsteile eines Copolyamids, aufgebaut aus Terephthalsäure (40 Mol%), Isophthalsäure (60 Mol%), Hexamethylendiamin (80 Mol%) und 4,4'-Diaminodicyclohexylmethan (20 Mol%) mit einer rel. Visk. von 1,86, gemessen in einer 1 gewichtsprozentigen Lösung in konz. $H_2SO_4$ bei 23°C und 20 Gewichtsteile eines EPDM-Kautschuks (Ethylen-Propylen-Dienkautschuk mit ca. 30 % Propylen) gemäß DOS 26 22 973 mit 0,5 % Maleinsäureanhydrid gepropft, wurden in einem Zweiwellenextrukder bei einer Temperatur von 295°C vermischt, extrudiert und granuliert. Aus dem Granulat hergestellte Testkästchen - (Abmessungen wie in Beispiel 1) zeigten eine stark strukturierte Oberfläche (Fließlinien, perlmuttartiger Glanz) und Blätterteigstruktur, so daß sich eine Schicht an der Oberfläche nach mechanischer Beschädigung mühelos abziehen ließ. Weitere Eigenschaften siehe Tabelle 1.

Vergleichsbeispiel 2

85 Gewichtsteile eines Copolyamids, aufgebaut aus Terephthalsäure (40 Mol%) und Isophthalsäure (60 Mol%) sowie Hexamethylendiamin mit einer rel. Visk. von 1,91, gemessen in einer 1 %igen Lösung in konz. $H_2SO_4$ bei 23°C und 15 Gewichtsteile eines Terpolymeren aus 67,5 Gew.% Ethylen, 32 Gew.% n-Butylacrylat und 0,5 Gew.% Maleinsäureanhydrid mit einem Schmelzindex von 14,5 g/10 min., gemessen bei 190°C und 2,16 kg Belastung, wurden in einem Zweischneckenextruder bei 290°C vermischt, extrudiert und granuliert. Das getrocknete Granulat wurde auf einer Spritzgußmaschine zu Testkästchen (120x60x40 mm) gespritzt.

Die Oberfläche der Testkästchen war stark strukturiert, zeigte Fließlinien und Blätterteigstruktur, so daß sich leicht eine hautförmige Schicht nach mechanischer Beschädigung abziehen ließ. Weitere Eigenschaften siehe Tabelle 1.

In der nachstehenen Tabelle 1 werden die Ergebnisse und weitere Eigenschaften zusammengefaßt.

Tabelle 1

| Beispiele 1-6 (erfindungsgemäß) | Zusammensetzung | Delaminierung | Kerbschlagzähigkeit nach DIN 53453 $kJ/m^2$ 23°C | -40°C | E-Modul nach DIN 53457 $N/MM^2$ |
|---|---|---|---|---|---|
| 1 | 80 Gewichtsteile Copolyamid aus IPS/TPS/HMD und 4,4'-Diaminodicyclohexylmethan + 33 Gewichtsteile Kautschukdispersion E1 | keine | 21 | 5 | 2069 |
| 2 | 83 Gewichtsteile Copolyamid aus IPS/TPS und HMD + 28 Gewichtsteile Kautschukdispersion E2 | keine | 56 | 10 | 1870 |
| 3 | 88 Gewichtsteile Copolyamid aus IPS/TPS und HMD + 20 Gewichtsteile Kautschukdispersion E3 | keine | 58 | 6 | 2041 |
| 4 | 80 Gewichtsteile Copolyamid aus IPS/TPS/HMD und 4,4'-Diaminocyclohexylmethan + 40 Gewichtsteile Kautschukdispersion E5 | keine | 21 | 6 | 2027 |
| 5 | 80 Gewichtsteile Copolyamid aus IPS/TPS/HMD und 4,4'-Diaminocyclohexylmethan + 40 Gewichtsteile Kautschukdispersion E6 | keine | 22 | 9 | 2055 |
| 6 | 78 Gewichtsteile Copolyamid IPS/TPS/HMD + 40 Gewichtsteile Kautschukdispersion E4 | keine | 29 | 11 | 1655 |
| 7 | 80 Gewichtsteile Copolyamid aus IPS/TPS/HMD und 4,4'-Diaminocyclohexylmethan + 40 Gewichtsteile Kautschukdispersion E7 | keine | 20 | 7 | 2150 |
| Vergleich 1 | 80 Gewichtsteile Copolyamid aus IPS/TPS/HMD und 4,4'-Diaminodicyclohexylmethan + 20 Gewichtsteile EPDM-Kautschuk | vorhanden | 31 | 10 | 2083 |
| Vergleich 2 | 85 Gewichtsteile Copolyamid aus IPS/TPS/HMD + 15 Gewichtsteile Terpolymeres | vorhanden | 30 | 5 | 1969 |

## Ansprüche

1. Schlagzähe Polyamidformmassen, enthaltend

A. 30 bis 95 Gewichtsteile eines linearen thermoplastischen Polyamids, aufgebaut aus Terephthalsäure und Isophthalsäure sowie Alkandiaminen und/oder Cycloalkandiaminen mit 4 bis 21 C-Atomen,

B. 5 bis 70 Gewichtsteile mindestens eines durch Emulsionspolymerisation hergestellten, mit einer Teilchengröße unter 2 µm in der Komponente A dispergierten und darin weitgehend unlöslichen kautschukelastischen Polymerisats, wobei die Summe von A und B 100 Gewichtsteile beträgt,

C. 0 bis 100 Gewichtsteile verstärkend wirkende Füllstoffe, bezogen auf die Summe der Komponenten A und B, sowie

D. gegebenenfalls Zusatzstoffe in wirksamen Mengen.

2. Schlagzähe Polyamid-Formmassen nach Anspruch 1, dadurch gekennzeichnet, daß die Komponente B aus Kern und Schale(n) besteht, wobei die Glasübergangstemperatur von Kern und/oder Schale unter -20°C liegt.

3. Schlagzähe Polyamid-Formmassen nach Anspruch 1 und 2, dadurch gekennzeichnet, daß die Komponente B zumindest teilweise vernetzt ist.

4. Schlagzähe Polyamid-Formmassen nach Anspruch 1 bis 3, dadurch gekennzeichnet, daß die Komponente B an der Oberfläche der Teilchen Molekülgruppen aufweist, die eine Haftung an den Molekülen der Komponente A bewirken.

5. Schlagzähe Polyamid-Formmassen nach Ansprüchen 1 bis 4, dadurch gekennzeichnet , daß sie als Komponente B ein Polymerisat enthalten, das zumindest an der Oberfläche der Teilchen Carbonsäure-, Carbonsäureester-oder Carbonsäureamidgruppen enthält.

6. Schlagzähe Polyamid-Formmassen nach Ansprüchen 1 bis 5, dadurch gekennzeichnet, daß die Teilchengrößenverteilung der Kautschuke (B) im Polyamid (A) von der Kautschukverteilung der Polymerdispersion vorgegeben wird.

7. Schlagzähe Polyamid-Formmassen nach Ansprüchen 1 bis 6, dadurch gekennzeichnet, daß sie durch inniges Vermischen einer Schmelze der Komponente A mit einer wäßrigen Dispersion der Komponente B unter gleichzeitigem Entfernen des dabei verdampfenden Wassers hergestellt worden sind.

8. Verfahren zur Herstellung der Polyamid-Formmassen gemäß Anspruch 1, dadurch gekennzeichnet, daß man eine Schmelze der Komponente A mit einer wäßrigen Dispersion der Komponente B innig vermischt und gleichzeitig das dabei verdampfende Wasser entfernt.